**Europäisches Patentamt**

**European Patent Office**

**Office européen des brevets**

(19)

(11) **EP 1 503 505 A2**

(12) # EUROPEAN PATENT APPLICATION

(43) Date of publication:
**02.02.2005 Bulletin 2005/05**

(51) Int Cl.7: **H04B 1/10**

(21) Application number: **04103579.1**

(22) Date of filing: **26.07.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | • **Yang, Zigang**<br> **Plano Texas 75023 (US)**<br>• **Refern, Arthur John**<br> **Plano Texas 75025 (US)**<br>• **Ali, Murtaza**<br> **Plano Texas 75024 (US)** |
| (30) Priority: **28.07.2003 US 628160** | |
| (71) Applicant: **TEXAS INSTRUMENTS INCORPORATED**<br>**Dallas, TX 75265 (US)** | (74) Representative: **Holt, Michael et al**<br>**Texas Instruments Ltd.,**<br>**PO Box 5069**<br>**Northampton, Northamptonshire NN4 7ZE (GB)** |
| (72) Inventors:<br>• **Dasgupta, Udayan**<br> **Irving Texas 75063 (US)** | |

(54) **Noise determination and DSL Modem with noise determination**

(57)    A noise determiner (140) for use with a communications system, a method of determining noise in a communications system and a digital subscriber line (DSL) modem (100). In one embodiment, the noise determiner (140) includes 1) a crosstalk identifier (144) that detects directly a noise source in a frequency domain from observed noise associated with the communications system and 2) a crosstalk estimator (148) coupled to the crosstalk identifier (144) and that provides a corresponding level of the noise source.

FIGURE 1

EP 1 503 505 A2

**Description**

TECHNICAL FIELD OF THE INVENTION

The present invention is directed, in general, to identifying noise within a communications system and, more specifically, to a noise determiner, a digital subscriber line (DSL) modem including the noise determiner and a method of determining noise.

BACKGROUND OF THE INVENTION

Performance of a communications system is affected by noise associated with an operating environment of the system. Understanding the noise typically assists communication through the system whether the system is wireless or wired. A digital subscriber line (DSL) system is an example of a wired communications system that communicates over copper telephone wires, a part of what is commonly referred to as the Plain Old Telephone System (POTS). An Asymmetric DSL (ADSL) system is a type of DSL system that receives data at a higher rate (known as the downstream rate) than when transmitting data (known as the upstream rate).

Typically in an ADSL system, a remote terminal or modem receives data from and transmits data to an ADSL modem connected to a Digital Subscriber Line Access Multiplier (DSLAM) in a central office over a channel that includes the copper telephone wires. Like other communications systems, accurate identification of noise sources within the ADSL system may improve communication by allowing the remote or central office modem to adapt to the noise. Additionally, identifying the noise source may allow the remote or central office modem to more easily determine deployment problems. Identifying noise sources, however, often increases the cost of a modem by requiring additional computations. A tradeoff, therefore, may exist between cost and performance.

Accordingly, what is needed in the art is an improved modem that efficiently identifies noise sources in a noisy environment.

SUMMARY OF THE INVENTION

To address the above-discussed deficiencies of the prior art, the present invention provides a noise determiner for use with a communications system, a method of determining noise in a communications system and a digital subscriber line (DSL) modem. In one embodiment, the noise determiner includes (1) a crosstalk identifier configured to detect directly a noise source in a frequency domain from observed noise associated with the communications system and (2) a crosstalk estimator coupled to the crosstalk identifier and configured to provide a corresponding level of the noise source.

In another aspect, the present invention provides a method of determining noise in a communications system including (1) directly detecting a noise source in a frequency domain from observed noise associated with the communications system and (2) providing a corresponding level of the noise source.

The present invention provides a single pass method of doing a least-squares fit of noise sources using a power spectral density (PSD) of an observed noise. Preferably, the noise sources have a multiplicative form discussed herein. Advantageously, the present invention may consider radio frequency interference (RFI) and unknown disturbers in the observed noise. The present invention, therefore, may identify noise sources having the multiplicative form in the presence of unknown disturbers. The single pass method allows the present invention to detect directly, or noniteratively, the noise sources and provide a corresponding level associated with each of the noise sources. The corresponding level may be an estimated energy percentage of a total energy associated with the observed noise.

In yet another aspect, the present invention provides a DSL modem including (1) a front end coupled to a DSL channel, (2) a transmitter coupled to the front end that processes a digital signal for analog transmission over the channel, (3) a receiver coupled to the front end that converts an analog signal received over the channel to a digital signal and (4) a noise determiner. The noise determiner includes (4a) a crosstalk identifier that detects directly in a frequency domain a noise source from observed noise associated with the channel and (4b) a crosstalk estimator coupled to the crosstalk identifier that provides a corresponding level of the noise source.

The foregoing has outlined preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention.

BRIEF DESCRIPTION OF THE DRAWINGS

For a more complete understanding of the present invention, reference is now made to the following descriptions taken in conjunction with the accompanying drawings, in which:

FIGURE 1 illustrates a block diagram of an embodiment of an Asymmetric Digital Subscriber Line (ADSL) modem constructed in accordance with the principles of the present invention;

FIGURE 2 illustrates a block diagram of an embodiment of a noise determiner constructed according to the principles of the present invention;

FIGURE 3 illustrates a representation of a PSD for a Noise A without RFI tones according to the principles of the present invention;

FIGURE 4 illustrates a representation of a PSD for a Noise B according to the principles of the present invention;

FIGURE 5 illustrates a representation of PSDs for ETSI NEXT and FEXT noise sources according to the principles of the present invention;

FIGURE 6 illustrates a table, TABLE 1, representing noise sources and estimated levels of energy associated with the noise sources according to the principles of the present invention;

FIGURE 7 illustrates a representation of an overall observed noise PSD and component noise PSDs according to the principles of the present invention; and

FIGUREs 8-10 illustrate representations of a simulation of determining noise in an ADSL communications system according to the principles of the present invention.

DETAILED DESCRIPTION

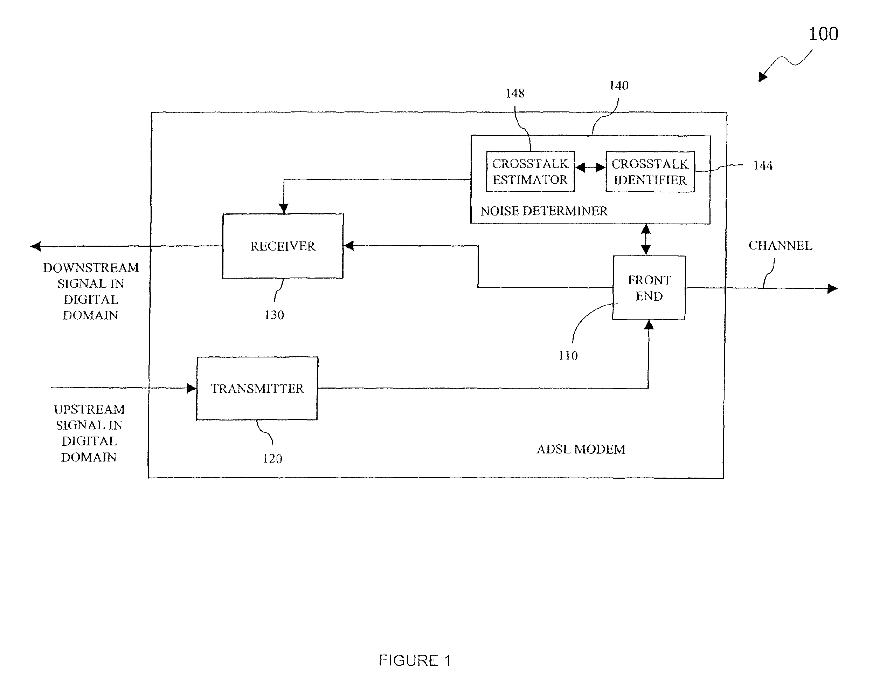

Referring initially to FIGURE 1, illustrated is a block diagram of an embodiment of an Asymmetric Digital Subscriber Line (ADSL) modem, generally designated 100, constructed in accordance with the principles of the present invention. The ADSL modem 100 includes a front end 110, a transmitter 120, a receiver 130, and a noise determiner 140. The noise determiner 140 includes a crosstalk identifier 144 and a crosstalk estimator 148.

The ADSL modem 100 may include components typically employed within a conventional DSL modem. The ADSL modem 100 may be a remote terminal that communicates with a Digital Subscriber Line Access Multiplier (DSLAM) in a central office of an ADSL system via a central office ADSL modem. In some embodiments, the ADSL modem 100 may be another type of modem, such as, for example, a digital subscriber line (DSL) modem. More specifically, the ADSL modem 100 could be a High bit-rate DSL (HDSL), a Single line DSL (SDSL) or a Very high bit-rate DSL (VDSL) modem. One skilled in the art will understand that the ADSL modem 100 may include additional components than those illustrated and discussed.

The front end 110, coupled to the transmitter 120 and the receiver 130, provides a connection for the ADSL modem 100 to a channel. The front end 110 may include a transformer, coupling capacitors and a hybrid. The channel may be a copper telephone line coupled to the central office ADSL modem. Additionally, the channel may include transmit filters at the ADSL modem 100 and receive filters at the central office ADSL modem.

The transmitter 120 may be configured to send a signal, an upstream signal, via the channel to the DSLAM. The transmitter 120 may receive the signal in a digital format from a computer system coupled to the ADSL modem 100. The transmitter 120 may process the digital signal for transmission including converting the upstream signal from a time domain to a frequency domain, adding a cyclic prefix and modulating the upstream signal. Additionally, the transmitter 120 may include a digital-to-analog converter (DAC) and filters, digital and analog, for shaping and attenuating the upstream signal. Furthermore, the transmitter 120 may include a line driver that adjusts transmit power of the upstream signal to adhere to a given power spectral density (PSD) mask. The transmitter 120 may be embodied as a sequence of operating instruction, dedicated hardware or a combination thereof. Some functionality of the transmitter 120 may be employed on a digital signal processor (DSP).

The receiver 130 may be configured to receive a signal, a downstream signal, in an analog format from the DSLAM via the channel. Essentially, the receiver 130 may operate in reverse of the transmitter 120. For example, the receiver 130 may convert the downstream signal from an analog format to a digital format for the computer system by employing an analog-to-digital converter (ADC). Additionally, the receiver 130 may include analog and digital filters for reducing noise and shaping the downstream signal. The receiver 130 may be embodied as a sequence of operating instruction, dedicated hardware or a combination thereof. Some functionality of the receiver 130 may be employed on a DSP.

The ADSL modem 100 also includes the noise determiner 140. The noise determiner 140 identifies different noise sources that are present in the ADSL system and estimates corresponding levels or parameters for the noise sources. In some embodiments, the noise determiner 140 may be a part of the receiver 130. The noise determiner 140 may be a sequence of operating instructions employed on a DSP. In some embodiments, the noise determiner 140 may be integrated with a datapump of the ADSL modem 100. The noise determiner 140 may operate before the ADSL modem 100 trains or may operate during an appropriate period of a training sequence. In certain embodiments, the noise determiner 140 may be implemented without real time computational requirements. The noise determiner 140 includes the crosstalk identifier 144 and the crosstalk estimator 148.

The crosstalk identifier 144 detects directly in a frequency domain a noise source from observed noise associated with the channel. The noise source may be a common noise source associated with the ADSL system. Of course, more than a single noise source may be identified. Preferably, multiple noise sources may be identified wherein each of the noise sources has a power spectral density (PSD) of a form based on EQUATION 1

$$P_N(f) = g(k)P_B(f) \tag{1}$$

where $P_N(f)$ is a PSD of the noise source as a function of frequency, $f$, $P_B(f)$ is a basis function that captures a PSD shape of the noise source and g(k) is a scaling function employed to appropriately scale $P_B(f)$.

The crosstalk identifier 144 may consider radio frequency interference (RFI) when identifying noise sources. Additionally, the crosstalk identifier 144 may operate in an environment having unknown disturbers. Preferably, the unknown disturbers in the environment are small compared to noise sources that may be identified. An unknown disturber may be a source of noise that has a PSD unknown to the noise determiner 140 whereas the noise determiner 140 may know the PSD of known noise sources. Examples of known noise sources that may typically affect the ADSL system may include, but not limited to, Additive White Gaussian Noise (AWGN), Digital Subscriber Line (DSL) Near-End Crosstalk (NEXT), High bit-rate DSL (HDSL) NEXT, T1 NEXT, and European Technical Standards Institute (ETSI) defined noises. Of course, other communications systems may include different or additional known noise sources. The noise sources may be associated with modeling system such as an American noise model, an old ETSI noise model, and a new ETSI noise model. Essentially, the crosstalk identifier 144 may advantageously identify a mixture of noise sources that have the multiplicative form expressed as EQUATION 1.

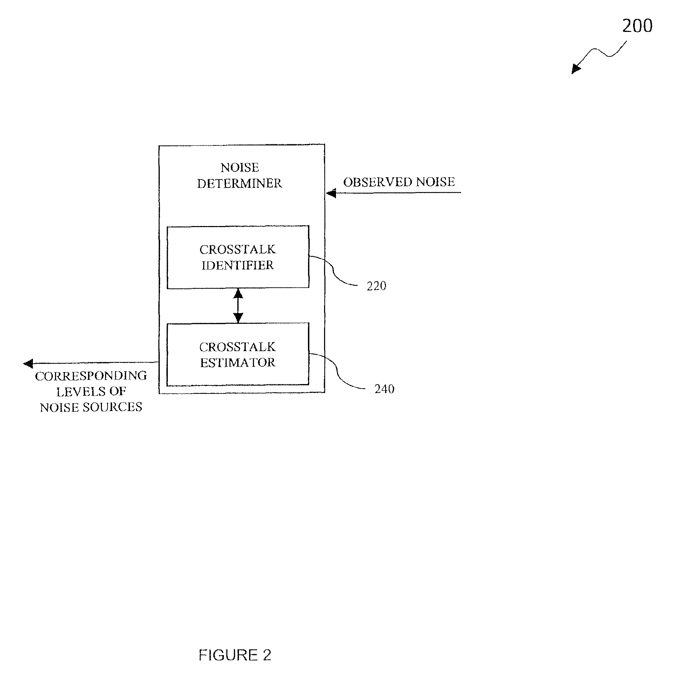

The crosstalk estimator 148, coupled to the crosstalk identifier 144, provides a corresponding level of the noise source. The crosstalk estimator 148 may determine the corresponding level of the noise source by employing the scaling function g. Operation of a noise determiner including a crosstalk identifier and a crosstalk estimator will be discussed in more detail with respect to FIGURE 2.

Turning now to FIGURE 2, illustrated is a block diagram of an embodiment of a noise determiner, generally designated 200, constructed according to the principles of the present invention. The noise determiner 200 includes a crosstalk identifier 220 and a crosstalk estimator 240.

The noise determiner 200 may be configured to identify different noise sources present in a communications system and estimate corresponding levels and parameters for the noise sources. In one embodiment, the communications system is an ADSL system and the noise determiner 200 may be employed within a receiver of an ADSL modem. Of course, the communications system may be a DSL system or another type of DSL system such as an HDSL, an SDSL or a VDSL system. Additionally, the communications system may be other wired or wireless systems that have noise sources with a PSD of a form based on EQUATION 1, $P_N(f) = g(k)P_B(f)$.

The noise determiner 200 may be trained off-line to estimate a noise floor associated with a CODEC of the ADSL modem and the noise sources that the ADSL modem may be expected to encounter. The noise determiner 200 may estimate the PSDs and determine the corresponding levels of the noise sources by "listening" to a channel before training begins (i.e. when a central office modem is quiet). The noise determiner 200 may send the levels and report the channel conditions to the receiver for possible modifications to adapt the receiver to conditions of the channel before establishing a connection.

The crosstalk identifier 220 may be configured to detect directly a noise source in a frequency domain from observed noise associated with the communications system. A PSD of the observed noise may result from a variety of noise sources. Some common noise sources that may affect performance in an ADSL system may include AWGN, DSL NEXT, HDSL NEXT, T1 NEXT, and ETSI defined noise. Basis functions ($P_B(f)$) and scaling functions (g(k))which may be associated with these type of noise sources in an ADSL system are represented below in sections a-g.

(a) AWGN

Basis Function:

$$P_{B,AWGN}(f) = 1, \ \forall f$$

Scaling Function:

$$g_{AWGN}(k_{AWGN}) = 10^{k_{AWGN}^{-30/10}},$$

where $k_{AWGN}$ is a level of AWGN in dBm/Hz.

(b) HDSL NEXT

Basis Function:

$$P_{B,HDSL\text{-}NEXT}(f) = PSD_{HDSL\text{-}Disturber} \times f^{3/2} \times 0.8546 \times 10^{-14},$$

where $PSD_{HDSL\text{-}DISTURBER}$ has a form of Equation 1.
Scaling Function:

$$g_{HDSL\text{-}NEXT}(k_{HDSL\text{-}NEXT}) = k_{HDSL\text{-}NEXT}^{0.6},$$

where $k_{HDSL\text{-}NEXT}$ equals a number of HDSL disturbers, $(k_{HDSL\text{-}NEXT} < 50)$.

(c) DSL NEXT

Basis Function:

$$P_{B,DSL\text{-}NEXT}(f) = PSD_{DSL\text{-}Disturber} \times f^{3/2} \times 0.8546 \times 10^{-14}$$

where $PSD_{DSL\text{-}DISTURBER}$ has a form of Equation 1.
Scaling Function:

$$g_{DSL\text{-}NEXT}(k_{DSL\text{-}NEXT}) = k_{DSL\text{-}NEXT}^{0.6},$$

where $k_{DSL\text{-}NEXT}$ equals a number of DSL disturbers, $(k_{DSL\text{-}NEXT} < 50)$.

(d) T1 NEXT

Basis Function:

$$P_{B,T1\text{-}NEXT}(f)^{3/2} = PSD_{T1\text{-}Disturber} \times f^{3/2} \times 0.8546 \times 10^{-14},$$

where $PSD_{T1\text{-}DISTURBER}$ has a form of Equation 1.
Scaling Function:

$$g_{T1\text{-}NEXT}(k_{T1\text{-}NEXT})^{0.6} = k_{T1\text{-}NEXT}^{0.6},$$

where $k_{T1\text{-}NEXT}$ equals a number of T1 disturbers, ($k_{T1\text{-}NEXT}$ < 50).

(e) Noise A

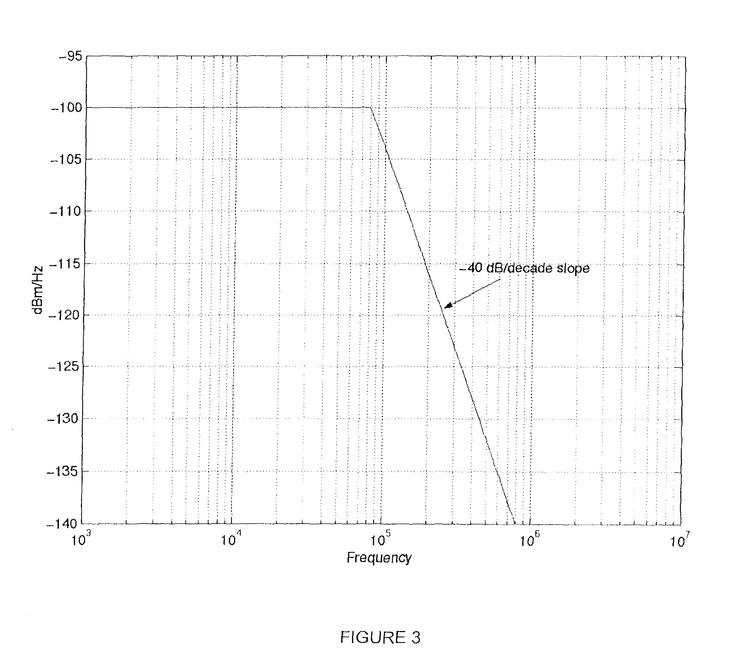

Basis Function: A PSD of Noise A typically has some RFI (10 discrete tones) as part of it. Without the RFI, the basis function, $P_{B,NoiseA}(f)$, is as shown in FIGURE 3. The overall wide-band noise power over the frequency range 1 kHz to 1.5 MHz for model A noise is $k_{NoiseA\text{-}nom}$ = -49.4 dBm.

Scaling Function:

$$g_{NoiseA}(k_{NoiseA}) = 10^{\frac{k_{NoiseA}-k_{NoiseA\text{-}nom}}{10}},$$

where $k_{NoiseA}$ equals power of Noise A in dBm.

(f) Noise B

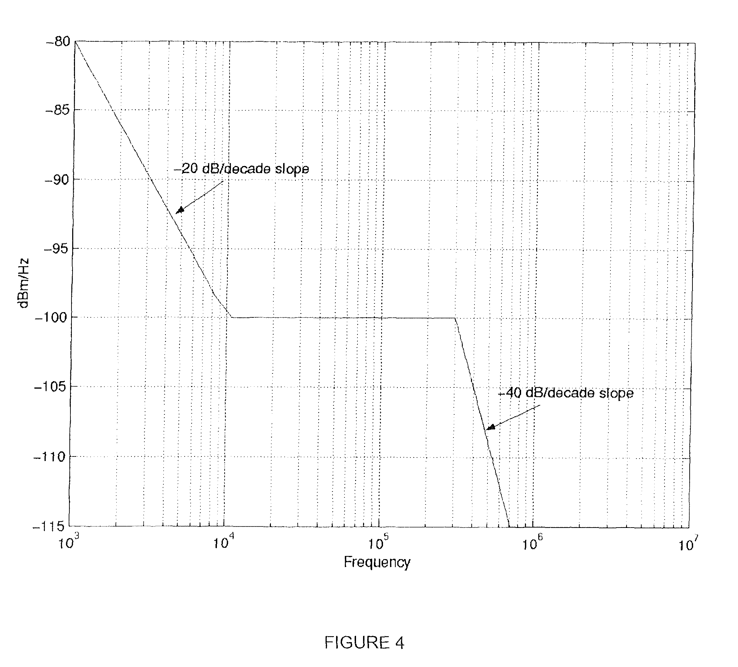

Basis Function:
$P_{B,NoiseB}(f)$ as illustrated in FIGURE 4. The overall wide-band noise power over the frequency range 1 kHz to 1.5 MHz for model B noise is $k_{NoiseB\text{-}nom}$ = -43.0 dBm.

Scaling Function:

$$g_{NoiseB}(k_{NoiseB}) = 10^{\frac{k_{NoiseB}-k_{NoiseB\text{-}nom}}{10}},$$

where $k_{NoiseB}$ equals power of Noise B in dBm.

(g) ETSI Noise A, B, C, D

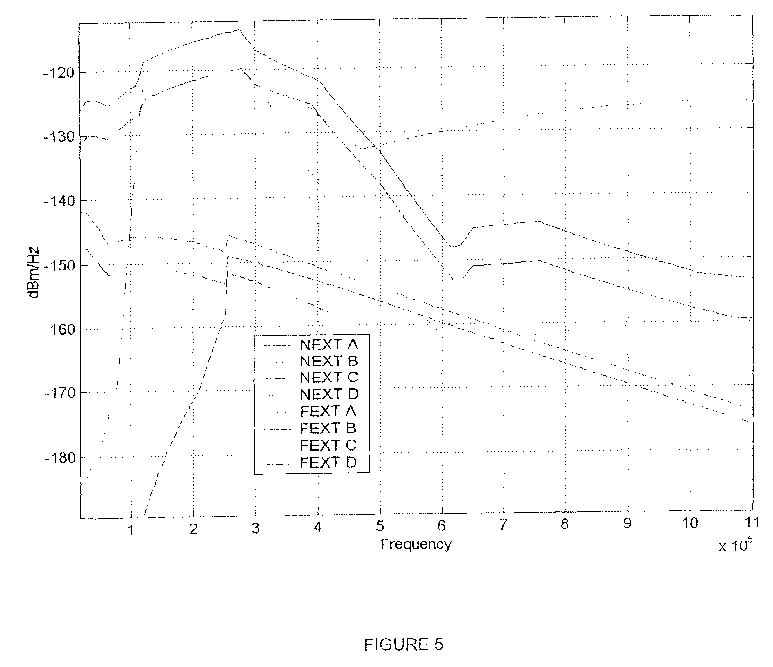

PSDs for NEXT and FEXT disturbers for noise models A, B, C, and D are specified by ETSI. FIGURE 5 includes an example of ETSI PSDs for NEXT and FEXT noises. In FIGURE 5, the NEXT noises may be calculated with a straight loop of length 3kft and the FEXT noises may be calculated with a straight loop of length 10kft. For ease of notation, the NEXT and FEXT different noise sources may be designated as NEXTA, NEXTB, NEXTC, NEXTD, FEXTA, FEXTB, FEXTC and FEXTD.

Basis Function:

$$P_{B,NEXT}(f) = PSD_{source\text{-}disturber} \, x \left\| 10^{(-50/20)} x(f/f0)^{0.75} x\sqrt{1-\left|S_{T0}(f,L)^4\right|}\right\|^2 ,$$

$$P_{B,FEXT}(f) = PSD_{source-disturber} \, x \left\| 10^{(-45/20)} x(f/f_0) x\sqrt{L_{nom}/L_0} \, x \left|S_{T0}(f,L)\right|\right\|^2 ,$$

where $f_0$=1MHz and $L_0$=1km, $L_{nom}$ denotes any constant value and $S\tau(f,L)$ denotes the loop transmission function. Scaling Function: $g_{NEXT}$=1, $g_{FEXT}$=L/$Lnom$.

In a mixture of noise sources, the crosstalk identifier 220 may model the observed noise as a superposition of component noise sources based on EQUATION 2,

$$P_N(f) = \sum_{m \in M} g_m(k_m).P_{B,m}(f),\qquad(2)$$

where M = {m1=AWGN, m2 = HDSL-NEXT, ... mL } are a set of component noise sources with known basis functions and unknown scaling functions. For example, the component noise sources may be the noise sources listed above in sections a-g. EQUATION 2 may be written as EQUATION 3,

$$P_N(f) = \begin{bmatrix} g_{m1}(k_{m1}) & g_{m2}(k_{m2}) & \cdots & g_{mL}(k_{mL}) \end{bmatrix} \begin{bmatrix} P_{B,m1}(f) \\ P_{B,m2}(f) \\ \cdots \\ P_{B,mL}(f) \end{bmatrix},\qquad(3)$$

$$P_N(f) = G \times P_B(f).$$

Since $P_N(f)$ and $P_B(f)$ may be known, the crosstalk identifier 220 may determine a scaling vector G based on EQUATION 4,

$$G = P_N(f) \times P_B^{-1}(f),\qquad(4)$$

where

$P_B^{-1}(f)$ is a pseudo-inverse of $P_B(f)$.

The crosstalk identifier 220 may employ EQUATION 4 to determine the scaling vector G and send the scaling vector G to the crosstalk estimator 240. The crosstalk estimator 240, coupled to the crosstalk identifier 220, may be configured to provide a corresponding level associated with each component noise source. The crosstalk estimator 240 may employ the scaling vector G to determine the corresponding level of the noise source.

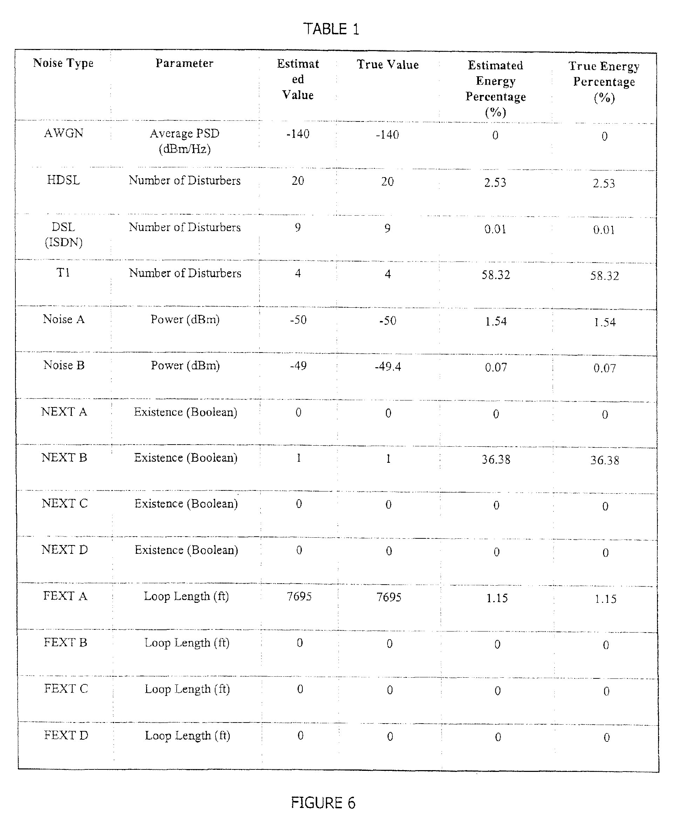

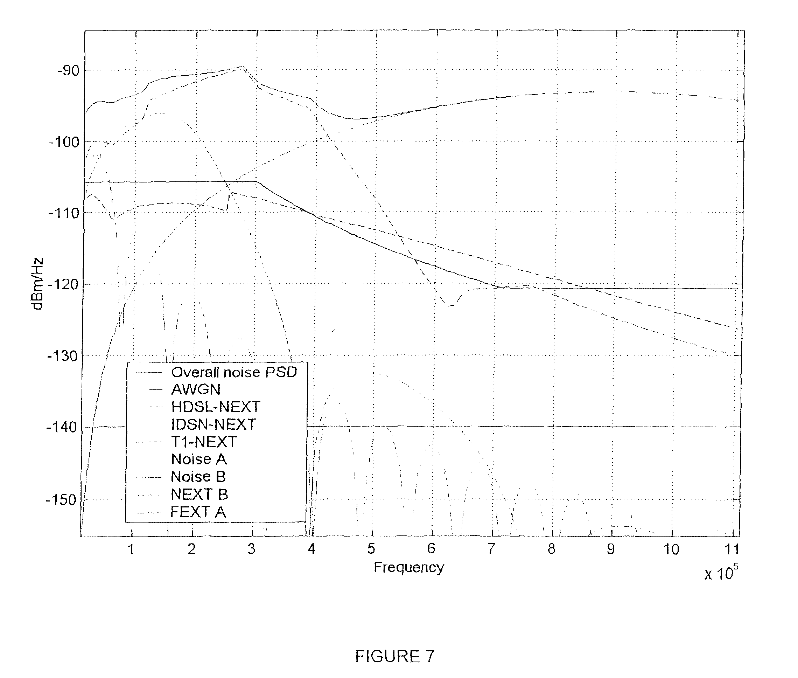

For example, an ADSL system may have an observed noise that includes component noise sources with known PSDs. The observed noise source may include AWGN noise, HDSL-NEXT, DSL-NEXT, T1-NEXT, Noise A, Noise B, NEXT B and FEXT A. In TABLE 1 of FIGURE 6, parameters of the component noise sources for this example are listed. In FIGURE 7, a PSD of the observed noise and PSDs of the component noise sources are represented.

The crosstalk identifier 220 may employ the known PSDs of the component noise sources of FIGURE 7 and the PSD of the observed noise, $P_N(f)$, to determine a scaling vector G. The crosstalk estimator 240 may then employ the scaling vector G to calculate levels of the component noise sources. The resulting values are given in TABLE 1 of FIGURE 6. The crosstalk estimator may also estimate parameters associated with the component noise sources in determining the corresponding levels associated therewith. The parameters, for example, may include an average PSD, a number of disturbers, power, existence or loop length.

In addition to noise sources with known PSDs, the noise determiner 200 may also operate in an environment of noise sources having unknown PSDs. The unknown PSDs may result from mismatches of noise sources to noise models or may be a source of unknown interference. To account for noise sources with unknown PSDs, an observed noise may be modeled according to EQUATION 5,

$$P_N(f) = \begin{bmatrix} g_{m1}(k_{m1}) & g_{m2}(k_{m2}) & \cdots & g_{mL}(k_{mL}) \end{bmatrix} \begin{bmatrix} P_{B,m1}(f) \\ P_{B,m2}(f) \\ \cdots \\ P_{B,mL}(f) \end{bmatrix} + N(f) \qquad (5)$$

$$P_N(f) = G \times P_B(f) + N(f)$$

where $N(f)$ denotes a PSD of an unknown interference.

The noise determiner 200, therefore, may identify and estimate corresponding levels associated with noise sources having known PSDs. Robustness may be used to determine effectiveness of the noise determiner 200 in identifying and estimating known PSDs in an environment also including noise with unknown PSDs. A robust noise determiner 200 may accurately estimate known PSDs even in the presence of unknown disturbers. Robustness may be defined by EQUATION 6,

$$R = \frac{|\hat{G} - G|}{|N(f)|}, \qquad (6)$$

where $\tau$ represents a norm operation and $\hat{G}$ represents a minimized square error (MSE) solution of EQUATION 5. Denoting $P_B = C_P \tilde{P}_{NB}$, where $\tilde{P}_{NB}$ contains a normalized vector of $P_B$ and $\boldsymbol{C_P} = \boldsymbol{C}_P^\mathsf{T}$ is a diagonal coefficient matrix results in EQUATION 7,

$$\frac{\hat{G} - G}{N(f)} = P_B^{-1}(f) = P_B^T(f)\left[P_B(f)P_B^T(f)\right]^{-1}, \qquad (7)$$

which may be represented by EQUATION 8,

$$= \widetilde{P}_{NB}^T \sum_{i=1}^L \frac{v_i v_i^T}{\sigma_i^2} C_p^{-1}, \qquad (8)$$

where $\sigma_i^2, i = 1, \Lambda, L$ are eigenvalues of normalized correlation matrix $A = \tilde{P}_{NB} \widetilde{P}_{NB}^T$. The eigen-decomposition of Matrix $A$ is

$$A = \sum_{i=1}^L \sigma_i^2 v_i v_i^T.$$

From equation (8), one skilled in the art will understand that robustness may be degraded if the normalized correlation matrix A has small eigen values. For the purpose of simplification, a measurement of robustness may be represented by EQUATION 9 as a minimum eigenvalue of matrix $A$,

$$R = \min(eig(A)). \qquad (9)$$

The noise determiner 200 may improve robustness by placing the noise source in a proper noise model. The component noise sources may be separated, for example, into three modeling systems: an American noise model, an old ETSI noise model and a new ETSI noise model. Typically, each modeling system exclusively describes component noise sources associated with its own modeling system such that component noise sources from different modeling systems do not coexist together.

Without separating, the noise sources, such as the noise sources of TABLE 1, may be enclosed in a base PSD matrix $P_B$ represented by a minimum eigenvalue of the normalized correlation matrix $R_{all}$ = 1.861×10⁻⁶. The crosstalk identifier 220 may increase robustness by separating the noise sources into, for example, an American noise model, i.e., $P_{B,1}$ = [$P_{awgn}$; $P_{hdsl}$; $P_{isdn}$; $P_{t1}$], resulting in a robustness value of $R_{American}$ = 0.0769. Based on an old ETSI noise model, i.e., $P_{B,2}$ = [$P_{awgn}$; $P_{noiseA}$; $P_{noiseB}$], the crosstalk identifier 220 may provide a robustness value of $R_{oldETSI}$ = 0.1482. Additionally, the crosstalk identifier 220 may employ a new ETSI model, i.e., $P_{B,3}^{1}$ = [$P_{awgn}$; $P_{nextA}$; $P_{nextB}$;

$P_{nextC}$; $P_{nextD}$; $P_{fextA}$; $P_{fextB}$; $P_{fextC}$; $P_{fextD}$], that results in a robustness value of $R_{newETSI}^{(1)}$ = 3.9657 × 10⁻⁶.

In other embodiments, the noise determiner 200 may further increase robustness for new ETSI noise models by selectively classifying and including ETSI noise sources. The crosstalk identifier 220 may realize that NEXT A and NEXT B have similar PSD shapes while FEXT A, FEXT B and FEXT C have similar PSD shapes as illustrated in FIGURE 5. Accordingly, the crosstalk identifier 220 may classify NEXT A and NEXT B as one type of noise source and include NEXT B in the shape matrix $P_B$. Furthermore, the crosstalk identifier 220 may classify FEXT A, FEXT B and FEXT C as one type of noise source and include FEXT B in the shape matrix $P_B$. In a new ETSI noise model, noise sources A, B, C, D, may represent different noise scenarios and may not coexist with each other. Since a level of NEXT A is higher than a level of NEXT B, scaling results may be used to distinguish between NEXT A and NEXT B. By classifying, the crosstalk identifier 220 may employ a modified base PSD represented by $P_{B,3}^{(2)}$ = [$P_{awgn}$; $P_{nextB}$; $P_{nextC}$;

$P_{nextD}$; $P_{fextC}$; $P_{fextD}$] having a resulting robustness value of $R_{newETSI}^{(2)}$ = 0.0175, which shows improvement over the robustness before classifying.

The noise determiner 200 may also increase robustness by ignoring a FEXT noise source. A PSD of the FEXT noise source may be highly dependent on a channel response. If a FEXT noise source is considered in the base PSD matrix, the crosstalk identifier 220 may be required to perform an online calculation to compute a pseudo inverse of the base PSD matrix. On the other hand, a PSD of a NEXT noise source has limited dependency on a channel response. Accordingly, the crosstalk identifier 220 may consider PSDs of NEXT noise sources and ignore PSDs of FEXT noise sources in the base PSD matrix to allow pre-computing of the inverse matrix to simplify real-time computational complexity. By ignoring FEXT noise sources, the base PSD can be simplified as $P_{B,3}^{(3)}$ = [$P_{awgn}$; $P_{nextB}$; $P_{nextC}$;

$P_{nextD}$] having a robustness represented by $R_{newETSI}^{(3)}$ = 0.0237. Though the FEXT noise source becomes unknown interference, for medium-long loops, the FEXT noise source typically has limited contribution to an overall PSD of the observed noise. Since PSDs for NEXT of the new ETSI noise model hardly change for loop lengths greater than 100ft, the crosstalk identifier 220 may assume basis PSDs for this noise source to be constant and pre-computed.

As mentioned above, the noise determiner 200 may consider RFI. RFI identification, however, may be difficult because a tone of the RFI may occur at a center of a Fast Fourier Transform (FFT) bin when, for example, the FFT is large. The RFI tone may manifest itself by a spike in the PSD of the observed noise if the RFI is stronger than a level of other noise sources. When the FFT is small, such as when an ADSL receiver uses an N=256 sized FFT, the RFI may "spread" (FFT spreading) and smear the PSD of the observed noise causing difficulty in identifying noise sources.

Accordingly, the crosstalk identifier 220 may consider the RFI as another noise source with a known PSD basis. Alternatively, the crosstalk identifier 220 may detect and remove the RFI. The crosstalk identifier 220 may detect and remove the RFI from the observed noise PSD by smoothening the observed noise PSD. To smoothen, the crosstalk identifier 220 may locate frequencies at which peak amplitudes exist in the observed noise PSD to determine frequencies at which RFI tones occur. Based on the peak amplitudes, the crosstalk identifier 220 may estimate strength of the RFI tones which may include analyzing PSD of bins surrounding the peak amplitudes to fine-tune the strength estimates. The crosstalk identifier 220 may subtract the peak amplitudes from peak positions or average RFI peak points to remove the RFI peaks and provide a smoother observed noise PSD that may be employed as $P_N(f)$. Although the RFI may not be completely removed, the noise determiner 200 may achieve good performance due to improved robustness.

In another embodiment, the crosstalk identifier 220 may smooth the RFI employing a different procedure. In this embodiment, the crosstalk identifier 220 locates frequencies at which peaks exist in the overall observed noise PSD to provide the the frequencies of the RFI tones. The strength of the RFI tones may be estimated based on peak amplitudes. The crosstalk identifier 220 may analyze a PSD at bins surrounding the peak to fine-tune frequency/amplitude estimates. The crosstalk identifier 220 may obtain a total RFI PSD by taking a FFT (of the same size as used in the computation of the overall observed noise PSD) of a summation of the RFI tones. The RFI tones may have the frequency and power as determined previously. The crosstalk identifier 220 may subtract the total RFI PSD from the overall observed noise PSD and, with some additional filtering, effectively remove effects of RFI and provide a smooth PSD that may be used as $P_N(f)$.

As discussed above, separating the noise sources into proper noise models may improve the robustness of the noise determiner 200. The crosstalk identifier 200, therefore, may need to identify a noise model as well as noise sources within the noise model. When considering RFI, the crosstalk identifier 220 may detect and smoothen the RFI if present. For each noise model under consideration, such as American, old ETSI, new ETSI, the crosstalk identifier 220 may compute a level of each noise source employing EQUATION 10,

$$\hat{G} = P_N(f) \times P_{B,i}^{-1}(f), \tag{10}$$

where $P_{B,i}(f)$ denotes the base PSD of the $i^{th}$ group. Additionally, the crosstalk identifier 220 may compute a detection mismatch employing EQUATION 11,

$$\hat{N}(f) = P_N(f) - \hat{G} \times P_{B,i}(f), \tag{11}$$

where $\hat{N}(f)$ represent a MSE of the PSD of the unknown interference. Furthermore, the crosstalk identifier 220 may calculate energy associated therewith by employing EQUATION 12,

$$Err\,(i) = \sum_{j=1}^{N} \left| \hat{N}(f_j) \right|, \tag{12}$$

where j denotes a frequency index. The crosstalk identifier 220 may select the noise model that minimizes error and provide identification results of noise sources within the noise model having a minimum error as final results.

The noise determiner 200, therefore, may identify various noise sources based on an overall observed noise PSD that may be measured by the noise determiner 200 or, in some embodiments, a receiver of an ADSL modem. Additionally, robustness of the noise determiner 200 may allow the use of a simple RFI smoothening technique without significant performance degradation. Although the noise determiner 200 models the observed noise as a summation of individual noise sources, the noise determiner 200 may also work as well with other combining methods like the FSAN method disclosed in *Draft Proposed American National Standard Spectrum Management for Loop Transmission Systems,* Issue 2, T1E1.4/2001-002, May 2001, which is hereby incorporated by reference in its entirety. According to the FSAN method, EQUATION 2 may be represented by EQUATION 13,

$$P_N(f) = \left[ \sum_{m \in M} (p_m(f))^{1/0.6} \right]^{0.6}, \tag{13}$$

where $p_m(f)$ is a PSD of an individual noise source. Assuming that the PSD of the individual noise source satisfies EQUATION 1 and based on EQUATION 13, EQUATION 4 may be adapted to EQUATION 14.

$$G = [(P_N(f))^{1/0.6} \times ((P_B(f))^{1/0.6})^{-1}]^{0.6} \tag{14}$$

Thus the noise determiner 200 may be adapted to provide corresponding levels of individual noise sources for different models.

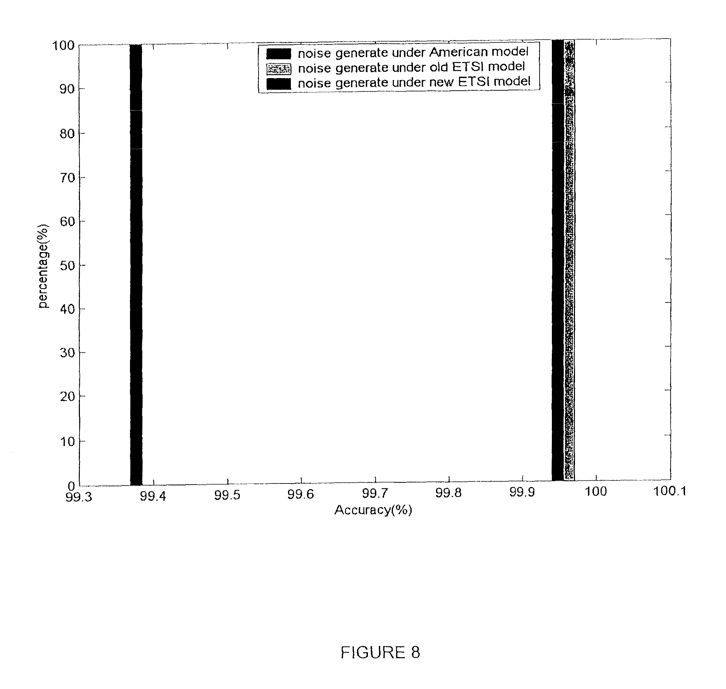

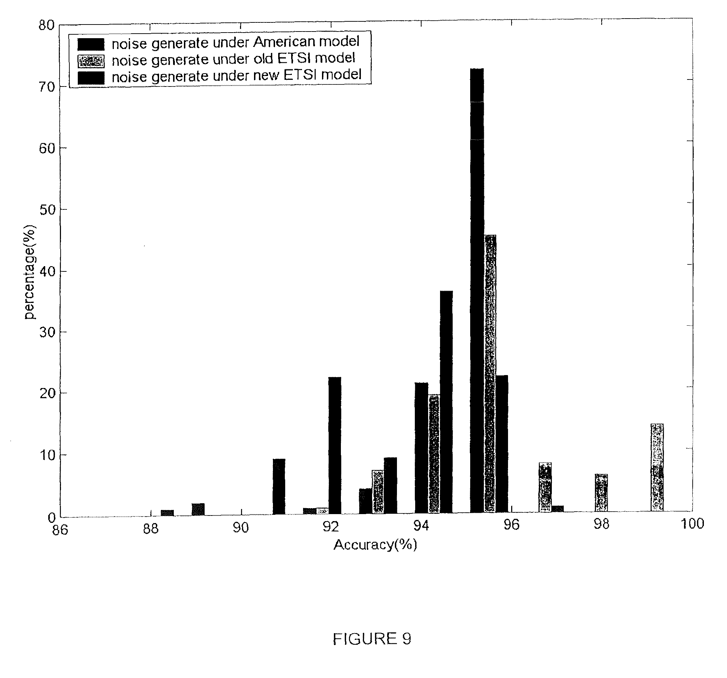

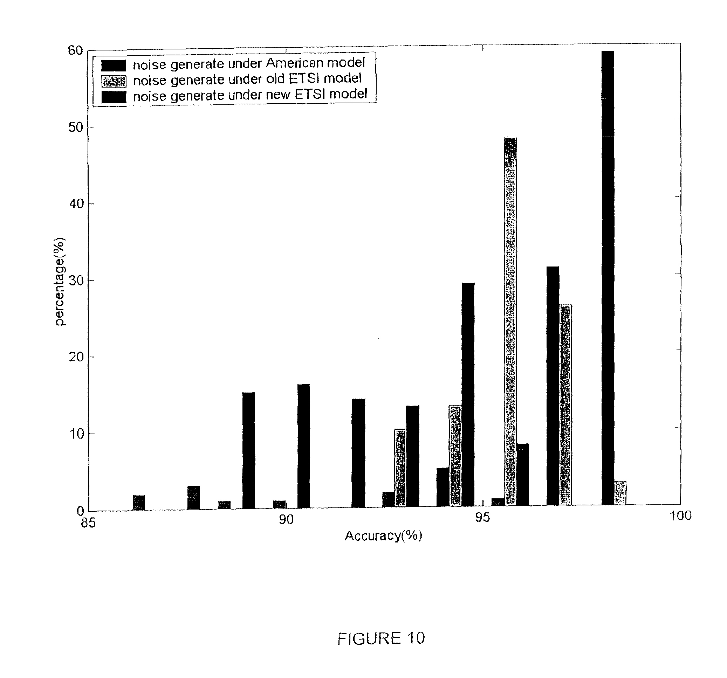

Turning now to FIGUREs 8-10, illustrated are representations of a simulation of determining noise in an ADSL communications system according to the principles of the present invention. The ADSL communications system includes an ADSL Customer Premise Equipment (CPE) modem operating in a noisy environment. The noise is generated randomly following one of three noise models, *i.e.*, American noise model, new ESTI noise model and old ETSI noise model. A level of the noise or a number of disturbers is generated randomly. RFI noise and unknown interference may be also included for testing purposes. To measure the effectiveness of determining the noise, accuracy may be measured employing EQUATION 15,

$$Accuracy = 1 - \frac{\sum_{i=1}^{L}\left|\hat{E}(i) - E(i)\right|}{\sum_{i=1}^{L} E(i)}, \tag{15}$$

which is a normalized energy difference between an actual value and an estimated value and $E$(i), $\hat{E}(i)$ is a total actual (estimated) energy of an $i^{th}$ noise source. Furthermore, the energy difference in AWGN and RFI noise may be ignored with focus placed on crosstalk noise source identification.

Monte Carlo simulations were run under different conditions to measure the accuracy of determining the noise sources. FIGURE 8 represents a histogram of the accuracy results from simulations where unknown interference was not introduced. FIGUREs 7 and 8 represent determining the noise sources in presence of unknown interference and RFI. The unknown interference may be generated randomly with a maximum PSD level at 10dB lower than an observed received noise PSD and the RFI noise is generated randomly with a maximum PSD level 9dB higher than the observed received noise PSD. In the new ETSI noise model, the channel may be generated longer than 7kft to limit the FEXT noise level. FIGUREs 8-10 illustrate that performance may be degraded slightly in the presence of unknown interference and RFI and that better results may be obtained from an American noise model and an old ETSI noise model.

Although the present invention has been described in detail, those skilled in the art should understand that they can make various changes, substitutions and alterations herein without departing from the spirit and scope of the invention in its broadest form.

**Claims**

1. A noise determiner for use with a communications system, comprising:

   a crosstalk identifier configured to detect directly a noise source in a frequency domain from observed noise associated with said communications system; and
   a crosstalk estimator coupled to said crosstalk identifier and configured to provide a corresponding level of said noise source.

2. A digital subscriber line (DSL) modem, comprising:

   a front end coupled to a DSL channel;
   a transmitter coupled to said front end that processes a digital signal for analog transmission over said channel; and
   a receiver coupled to said front end that converts an analog signal received over said channel to a digital signal; and
   a noise determiner as recited in Claim 1, including:

      the crosstalk identifier configured to detect directly in a frequency domain a noise source from observed noise associated with said channel; and
      the crosstalk estimator coupled to said crosstalk identifier to provide a corresponding level of said noise source.

3. The apparatus as recited in either Claim 1 or Claim 2, wherein said crosstalk identifier considers radio frequency interference.

4. The apparatus as recited in any of Claims 1 - 3, wherein said crosstalk identifier considers unknown disturbers.

5. The apparatus as recited in any of Claims 1 - 4, wherein said crosstalk identifier places said noise source into a modeling system selected from the group consisting of:

an American noise model,
an old European Technical Standards Institute (ETSI) noise model, and
a new ETSI noise model.

6. The apparatus as recited in any of Claims 1 - 5, wherein said noise source has a power spectral density of a form $P_N(f) = g(k)P_B(f)$.

7. The apparatus as recited in any of Claims 1 - 6, wherein said noise source is a noise selected from the group consisting of:

Additive White Gaussian Noise,
Digital Subscriber Line (DSL) Near-End Crosstalk (NEXT),
High Bit-Rate DSL (HDSL) NEXT,
T1 NEXT, and
European Technical Standards Institute (ETSI) defined noise.

8. The apparatus as recited in any of Claims 1 - 7, wherein said communications system or modem is an Asymmetric DSL modem system or modem.

9. A method of determining noise in a communications system, comprising:

directly detecting a noise source in a frequency domain from observed noise associated with said communications system; and
providing a corresponding level of said noise source.

10. The method as recited in Claim 9, wherein said detecting includes considering radio frequency interference.

11. The method as recited in either Claim 9 or Claim 10, wherein said detecting includes considering unknown disturbers.

12. The method as recited in any of Claims 9 - 11, wherein said detecting includes placing said noise source into a modeling system selected from the group consisting of:

an American noise model,
an old European Technical Standards Institute (ETSI) noise model, and
a new ETSI noise model.

13. The method as recited in any of Claims 9 - 12, wherein said noise source has a power spectral density of a form $P_N(f) = g(k)P_B(f)$.

14. The method as recited in any of Claims 9 - 13, further including selecting said noise source from the group consisting of:

Additive White Gaussian Noise,
Digital Subscriber Line (DSL) Near-End Crosstalk (NEXT),
High Bit-Rate DSL (HDSL) NEXT,
T1 NEXT, and
European Technical Standards Institute (ETSI) defined noise.

15. The method as recited in any of Claims 9 - 14, wherein said communications system is a digital subscriber line (DSL) system.

FIGURE 1

EP 1 503 505 A2

200

NOISE
DETERMINER

OBSERVED NOISE

CROSSTALK
IDENTIFIER

220

CROSSTALK
ESTIMATOR

240

CORRESPONDING
LEVELS OF
NOISE SOURCES

FIGURE 2

FIGURE 3

FIGURE 4

FIGURE 5

TABLE 1

| Noise Type | Parameter | Estimated Value | True Value | Estimated Energy Percentage (%) | True Energy Percentage (%) |
|---|---|---|---|---|---|
| AWGN | Average PSD (dBm/Hz) | -140 | -140 | 0 | 0 |
| HDSL | Number of Disturbers | 20 | 20 | 2.53 | 2.53 |
| DSL (ISDN) | Number of Disturbers | 9 | 9 | 0.01 | 0.01 |
| T1 | Number of Disturbers | 4 | 4 | 58.32 | 58.32 |
| Noise A | Power (dBm) | -50 | -50 | 1.54 | 1.54 |
| Noise B | Power (dBm) | -49 | -49.4 | 0.07 | 0.07 |
| NEXT A | Existence (Boolean) | 0 | 0 | 0 | 0 |
| NEXT B | Existence (Boolean) | 1 | 1 | 36.38 | 36.38 |
| NEXT C | Existence (Boolean) | 0 | 0 | 0 | 0 |
| NEXT D | Existence (Boolean) | 0 | 0 | 0 | 0 |
| FEXT A | Loop Length (ft) | 7695 | 7695 | 1.15 | 1.15 |
| FEXT B | Loop Length (ft) | 0 | 0 | 0 | 0 |
| FEXT C | Loop Length (ft) | 0 | 0 | 0 | 0 |
| FEXT D | Loop Length (ft) | 0 | 0 | 0 | 0 |

FIGURE 6

FIGURE 7

FIGURE 8

FIGURE 9

EP 1 503 505 A2

FIGURE 10